# EUROPEAN PATENT APPLICATION

(11) **EP 2 924 544 A1**
(43) Date of publication of application: **30.09.2015**
(21) Application number: 15157805.1
(22) Date of filing: 05.03.2015
(51) Int. Cl.: G06F 3/0346, G06F 3/01, G06F 21/31

(54) **Methods and systems for managing motion information for electronic devices**

(30) Priority: 25.03.2014 TW 103110988
(71) Applicant: Noodoe Corporation, Taipei City 115 (TW)
(72) Inventor: Wang, John C., 115 Taipei City (TW); Huang, Ming-San, 115 Taipei City (TW); Hsu, Chih-Feng, 115 Taipei City (TW); Hou, Yi-An, 115 Taipei City (TW)
(74) Representative: Karakatsanis, Georgios

(57) **Abstract**

Systems and methods for managing motion information for electronic devices (100) are provided. First, motion information is received by an electronic device (420) via a network. A motion of the electronic device (420) is detected by at least one sensor of the electronic device (420). A comparison process is performed for the detected motion of the electronic device (420) and the received motion information. In some embodiments, at least one component (V1) of the electronic device (420) and/or at least one component of a specific electronic device (410) is triggered to perform a specific process according to the result of the comparison process.

## Description

### BACKGROUND

### Technical Field

The disclosure relates generally to methods and systems for managing motion information for electronic devices, and, more particularly to methods and systems that can transmit motion information between electronic devices, and perform related applications.

### Description of the Related Art

Recently, electronic devices, such as smart phones, notebooks, wearable devices, or other portable devices, have become more and more technically advanced and multifunctional. For example, portable devices have network connectivity capabilities. Users can use their portable devices to connect to networks at anytime and anywhere. The convenience and new functionalities advanced by modern technology have made these devices into necessities of life.

Currently, an electronic device can have at least one motion sensor, such as an accelerometer or a Gyro sensor for detecting a motion of the electronic device. The motion detected by the motion sensor can be used for various applications. For example, the browsing mode of the electronic device can be adjusted between a portrait mode and a landscape mode according to the detected motion. In another example, a command can be generated according to the detected motion, and the command can be transmitted to a specific electronic device to control a process on that specific electronic device.

Generally, the detected motion of an electronic device must be transformed into a command, and the electronic device itself or other electronic devices will perform related applications based on that command. However, in some cases, the detected motion may be more meaningful or have more applicable values for the electronic device itself or other electronic devices. Additionally, the motions generated by the respective devices may be combined to perform a variety of applications.

### SUMMARY

Methods and systems for managing motion information for electronic devices are provided, wherein motion information can be transmitted between electronic devices, and related applications can be performed accordingly.

In an embodiment of a method for managing motion information for electronic devices, motion information is received by an electronic device via a network. A motion of the electronic device is detected by at least one sensor of the electronic device. Then, a comparison process is performed for the detected motion of the electronic device and the received motion information. In some embodiments, the purpose of the comparison process may be to detect whether the two types of motion are the same.

An embodiment of a system for managing motion information for electronic devices comprises a network connecting unit, at least one sensor, and a processing unit. The network connecting unit receives motion information via a network. The at least one sensor detects a motion of an electronic device. The processing unit performs a comparison process for the detected motion of the electronic device and the received motion information.

In some embodiments, at least one sensor of a specific electronic device can detect a motion of the specific electronic device to generate the motion information. In some embodiments, at least one component of the electronic device and/or at least one component of the specific electronic device is triggered to perform a specific process according to the result of the comparison process.

In an embodiment of a method for managing motion information for electronic devices, motion information is provided in a first electronic device. The motion information is transmitted to a second electronic device via a network by the first electronic device. A specific application is performed according to the motion information by the second electronic device, wherein the specific application triggers at least one component of the second electronic device to perform a process according to the motion information.

An embodiment of a system for managing motion information for electronic devices comprises a first electronic device and a second electronic device. The first electronic device has motion information, and transmits the motion information to the second electronic device via a network. The second electronic device performs a specific application according to the motion information, wherein the specific application triggers at least one component of the second electronic device to perform a process according to the motion information.

In some embodiments, the specific application triggers at least one vibration unit of the second electronic device to perform a vibration process according to the motion information, thus representing the received motion information. In some embodiments, the vibration process corresponds to a vibration pattern, which defines a vibration state corresponding to at least one of the at least one vibration unit at minimally point, and the second electronic device instructs the at least one vibration unit to perform the vibration process according to the vibration pattern.

In some embodiments, a specific figure is displayed via a display unit of the second electronic device, wherein the specific application determines a display portion in the specific figure according to the motion information, and the display portion is displayed in the display unit. In some embodiments, the display portion is originally located at a first position in the specific figure, and the display portion is moved from the first position to a second position in the specific figure according to the motion information, wherein the movement direction of the display portion is opposite to the movement direction of the motion information.

In some embodiments, the motion information comprises a movement velocity, a movement direction, and/or a movement distance corresponding to a motion, and the specific application is performed according to the movement velocity, the movement direction, and/or the movement distance.

In some embodiments, at least one sensor of the second electronic device detects a motion of the second electronic device, and a comparison process is performed for the motion of the second electronic device and the received motion information.

In an embodiment of a method for managing motion information for electronic devices, first motion information is provided in a first electronic device, and second motion information is provided in a second electronic device. Then, the first motion information is transmitted to a third electronic device via a network by the first electronic device, and the second motion information is transmitted to the third electronic device via a network by the second electronic device. A specific application is performed according to the first motion information and the second motion information by the third electronic device.

An embodiment of a system for managing motion information for electronic devices comprises a first electronic device, a second electronic device, and a third electronic device. The first electronic device has first motion information, and transmits the first motion information to the third electronic device via a network. The second electronic device has second motion information, and transmits the second motion information to the third electronic device via a network. The third electronic device performs a specific application according to the first motion information and the second motion information.

In some embodiments, the third electronic device performs an accumulation process for the first motion information and the second motion information in respective direction axes, and performs the specific application according to the result of the accumulation process.

The methods and systems for managing motion information for electronic devices can transmit motion information of an electronic device to another electronic device, and the electronic device which received the motion information can perform related applications according to the motion information, thereby increasing the applicability of electronic devices.

Methods for managing motion information for electronic devices may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a system for managing motion information for electronic devices of the invention;
Fig. 2 is a schematic diagram illustrating an embodiment of an electronic device of the invention;
Fig. 3 is a flowchart of an embodiment of a method for managing motion information for electronic devices of the invention;
Figs. 4A and 4B are schematic diagrams illustrating an example of motion management for electronic devices of the invention;
Figs. 5A and 5B are schematic diagrams illustrating an example of motion management for electronic devices of the invention;
Fig. 6 is a schematic diagram illustrating an example of motion management for electronic devices of the invention;
Figs. 7A and 7B are schematic diagrams illustrating an example of motion management for electronic devices of the invention;
Figs. 8A and 8B are schematic diagrams illustrating an example of motion management for electronic devices of the invention;
Fig. 9 is a flowchart of another embodiment of a method for managing motion information for electronic devices of the invention;
Fig. 10 is a flowchart of another embodiment of a method for managing motion information for electronic devices of the invention; and
Fig. 11 is a flowchart of another embodiment of a method for managing motion information for electronic devices of the invention.

### DETAILED DESCRIPTION OF THE INVENTION

Methods and systems for managing motion information for electronic devices are provided.

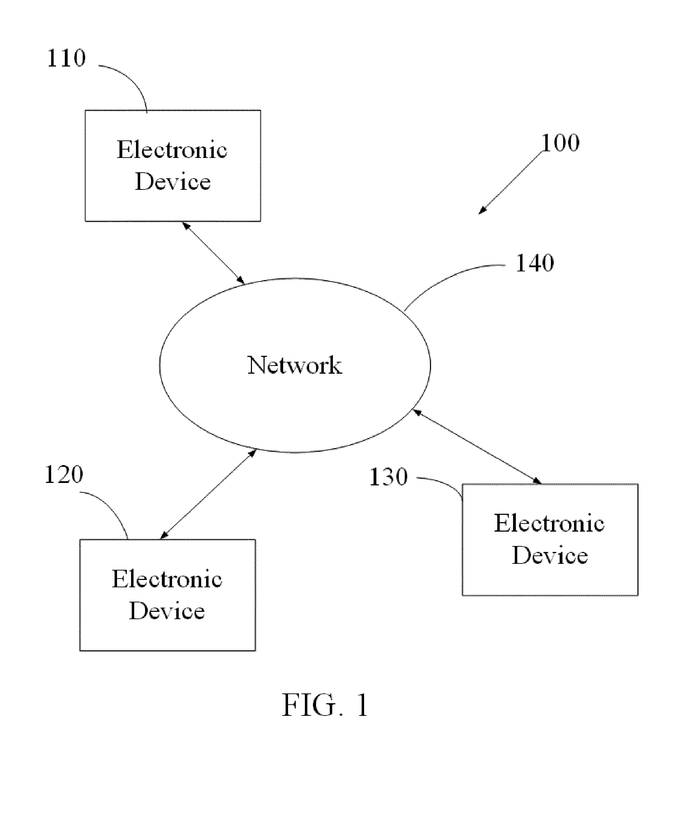

Fig. 1 is a schematic diagram illustrating an embodiment of a system for managing motion information for electronic devices of the invention. As shown in Fig.1, the system for managing motion information for electronic devices 100 can comprise at least one electronic device (110, 120, and 130). The electronic devices can communicate with each other via a network 140, such as a wired network, a telecommunication network, and/or a wireless network. In the present application, motion information in an electronic device can be transmitted to other electronic devices via the network 140. In some embodiments, the motion information in the electronic device may be generated by the electronic device itself, or downloaded from a specific server.

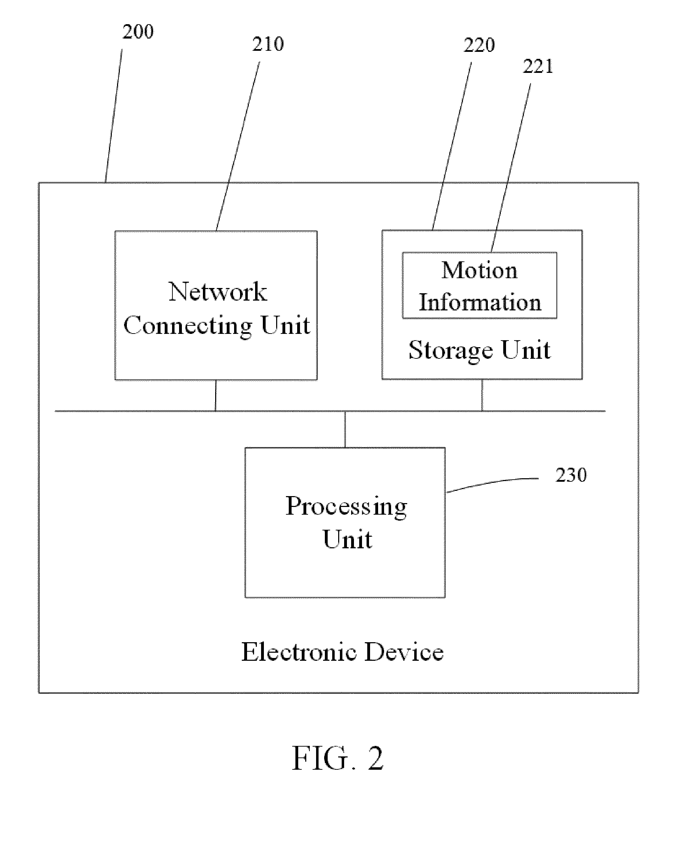

Fig. 2 is a schematic diagram illustrating an embodiment of an electronic device of the invention. The electronic device may be a portable device, such as a mobile phone, a smart phone, a PDA (Personal Digital Assistant), a GPS (Global Positioning System), a notebook, a tablet computer, or a wearable device. As shown in Fig. 2, the electronic device 200 comprises a network connecting unit 210, a storage unit 220, and a processing unit 230. The electronic device 200 can have network connecting capabilities to connect to a network, such as a wired network, a telecommunication network, and/or a wireless network by using the network connecting unit 210. The storage unit 220 comprises at least one motion information 221. In some embodiments, the electronic device 200 further comprises at least one sensor (not shown in Fig. 2) for detecting a motion of the electronic device 200 to generate the motion information 221. In some embodiments, the sensor may be an accelerometer such as a G-sensor for generating information of velocity and displacement when the electronic device moves. In some embodiments, the sensor may be a Gyro sensor for generating information of angular acceleration when the electronic device moves. In other words, the motion information 221 may be a variation of displacement, velocity, and/or angular acceleration generated in a predefined interval in which the motion of the electronic device occurred. It is noted that, in some embodiments, the motion information 221 comprises a movement velocity, a movement direction, and/or a movement distance corresponding to a motion. It is noted that, the above sensors are only examples of the present invention, and the present invention is not limited thereto. Any sensor which can detect the motion of an electronic device can be applied in the present invention. Additionally, in some embodiments, the motion information 221 can be downloaded from another electronic device or a specific server via a network. The processing unit 230 can control related operations of hardware and software in the electronic device 200, and perform the methods for managing motion information for electronic devices of the invention, which will be discussed later.

It is understood that, in some embodiments, the electronic device 200 can further comprise a display unit (not shown in Fig. 2) for displaying related information, such as images, interfaces, and/or related data. In some embodiments, the electronic device 200 can further comprise at least one voice output unit (not shown in Fig. 2), such as a speaker for outputting sounds. In some embodiments, the electronic device 200 can further comprise at least one vibration unit (not shown in Fig. 2). In some embodiments, the electronic device 200 can have multiple vibration units with various types. For example, the vibration unit may be a piezoelectric vibrator, a rotary motor vibrator, and/or a linear motor vibrator. It is noted that, these types of vibrator are only examples of the present invention, and the present invention is not limited thereto. The respective types of vibrator can be designed according to different requirements and applications.

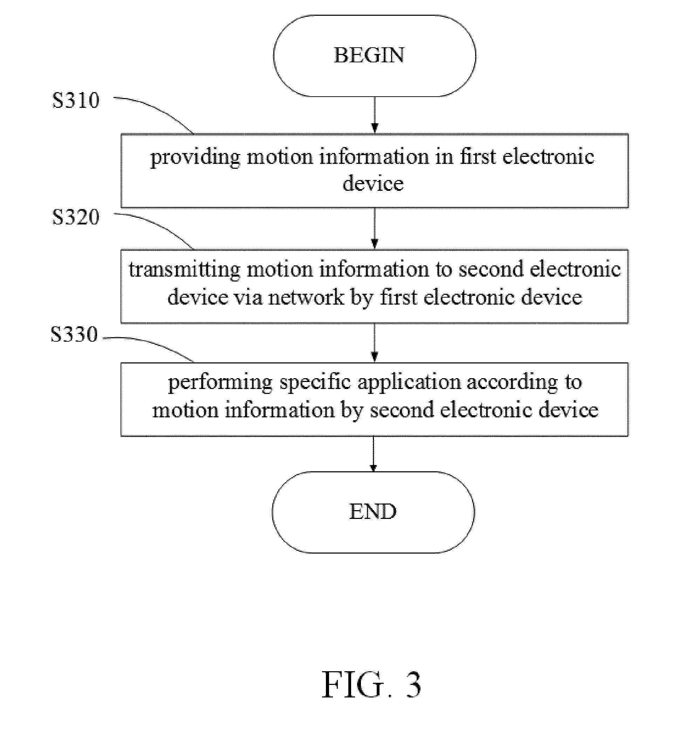

Fig. 3 is a flowchart of an embodiment of a method for managing motion information for electronic devices of the invention.

In step S310, motion information is provided in a first electronic device. It is understood that, in some embodiments, the first electronic device may have at least one sensor for detecting a motion of the first electronic device to generate the motion information. In some embodiments, the sensor may be an accelerometer and/or a Gyro sensor. The motion information may be a variation of displacement, velocity, and/or angular acceleration generated in a predefined interval in which the motion of the electronic device occurred. It is noted that, the above sensors are only examples of the present invention, and the present invention is not limited thereto. Any sensor which can detect the motion of an electronic device can be applied in the present invention. In step S320, the first electronic device transmits the motion information to a second electronic device via a network, such as a wired network, a telecommunication network, and/or a wireless network. Then, in step S330, the second electronic device performs a specific application according to the motion information. It is noted that, the specific application can trigger at least one component of the second electronic device to perform a process according to the received motion information. As described, in some embodiments, the motion information can comprise movement velocity, movement direction, and/or movement distance corresponding to a motion. The specific application can be performed according to the movement velocity, the movement direction, and/or the movement distance.

It is understood that, in some embodiments, at least one sensor of the second electronic device can detect a motion of the second electronic device, and a comparison process is performed for the motion of the second electronic device and the received motion information. Related details of the comparison process are discussed later.

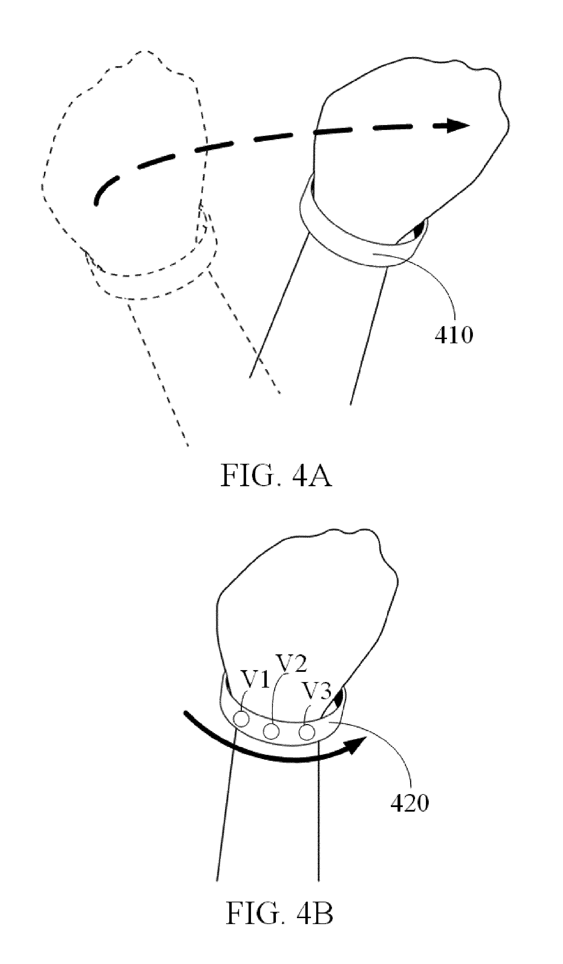

It is understood that, in some embodiments, the specific application can trigger at least one vibration unit of the second electronic device to perform a vibration process according to the motion information, thus representing the received motion information. For example, the first electronic device and the second electronic device may be wearable devices, and the wearable devices can directly connect with each other via a network, or by way of portable devices, such as smart phones respectively corresponding to the wearable devices. A user can cause the first electronic device to generate a motion, and the sensor of the first electronic device can detect the motion of the first electronic device to generate the corresponding motion information. The first electronic device transmits the motion information to the second electronic device via a network. The specific application in the second electronic device can trigger at least one vibration unit of the second electronic device to perform a vibration process according to the motion information, thus representing the received motion information. It is understood that, in some embodiments, the vibration process can correspond to a vibration pattern, which defines a vibration state corresponding to at least one of the vibration units at minimally one time point. In some embodiments, the vibration state can comprise an activation state, such as an activated state or an inactivated state. In some embodiments, the vibration state can comprise a vibration amplitude, a vibration frequency, and/or a vibration period. In other words, the vibration pattern can determine the timing and manner of vibration for respective vibration units. The second electronic device can instruct at least one vibration unit to perform the vibration process according to the vibration pattern. Figs. 4A and 4B are schematic diagrams illustrating an example of motion management for electronic devices of the invention. A wearable device 410 can be worn on the arm of a first user. The first user can cause the wearable device 410 to generate a motion from left to right, as shown in Fig. 4A, and the corresponding motion information is transmitted to a wearable device 420 worn on the arm of a second user via a network. In the example, the wearable device 420 has vibration units V1, V2, and V3. After the motion information is received, the wearable device 420 can instruct the respective vibration unit from left to right to perform a vibration process according to the motion information, thus representing the received motion information. In the example, the vibration unit V1 vibrates first, the vibration unit V2 begins to vibrate after the vibration unit V1 stopped, and the vibration unit V3 begins to vibrate after the vibration unit V2 stopped, as shown in Fig. 4B.

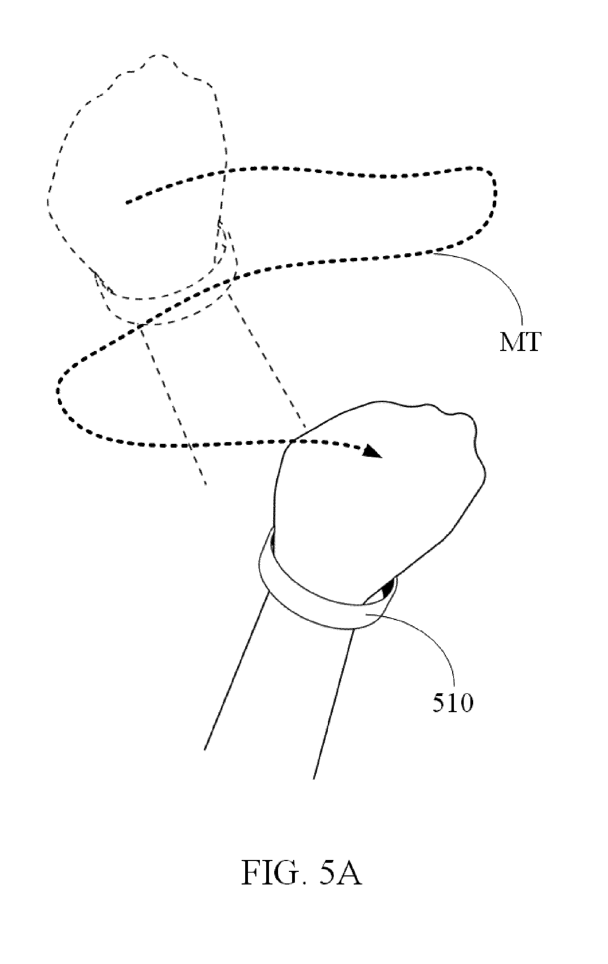

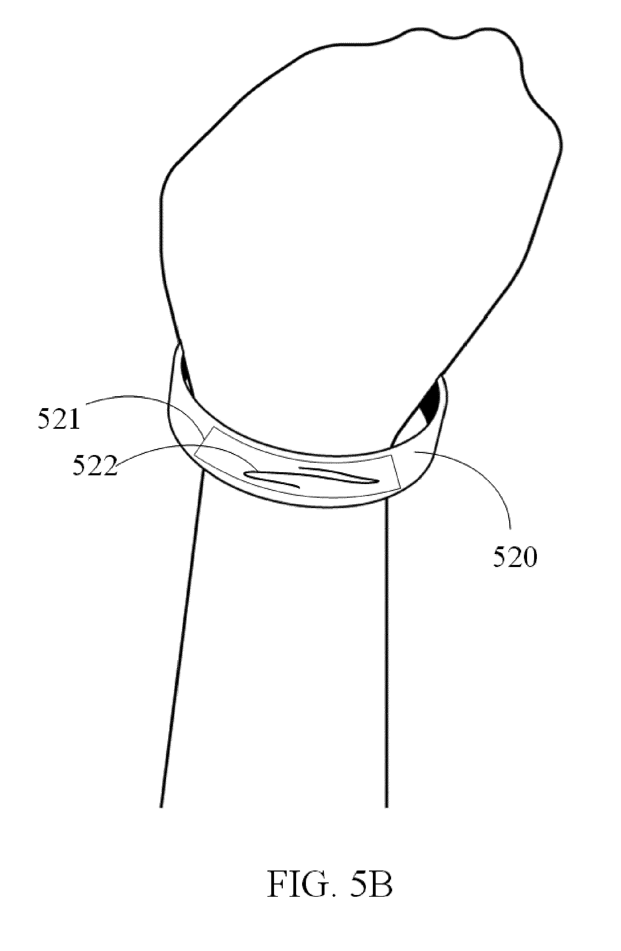

Additionally, in some embodiments, the specific application can perform a display process via at least one display unit of the second electronic device according to the motion information, thus displaying a movement track corresponding to the received motion information. Figs. 5A and 5B are schematic diagrams illustrating an example of motion management for electronic devices of the invention. In the example, a wearable device 510 can be worn on the arm of a first user, and the first user can use the wearable device 510 to write a specific track MT in the air, as shown in Fig. 5A. Similarly, the sensor of the wearable device 510 can detect the motion of the wearable device 510 to generate the corresponding motion information. The wearable device 510 transmits the motion information to a wearable device 520 worn on the arm of a second user via a network. The specific application in the wearable device 520 can instruct the display unit 521 of the wearable device 520 to display a movement track 522 corresponding to the motion information according to the received motion information, as shown in Fig. 5B. As described, in some embodiments, the motion information can comprise a movement velocity, a movement direction, and/or a movement distance corresponding to a motion. The display of the movement track in the second electronic device can be performed according to the movement velocity, the movement direction, and/or the movement distance.

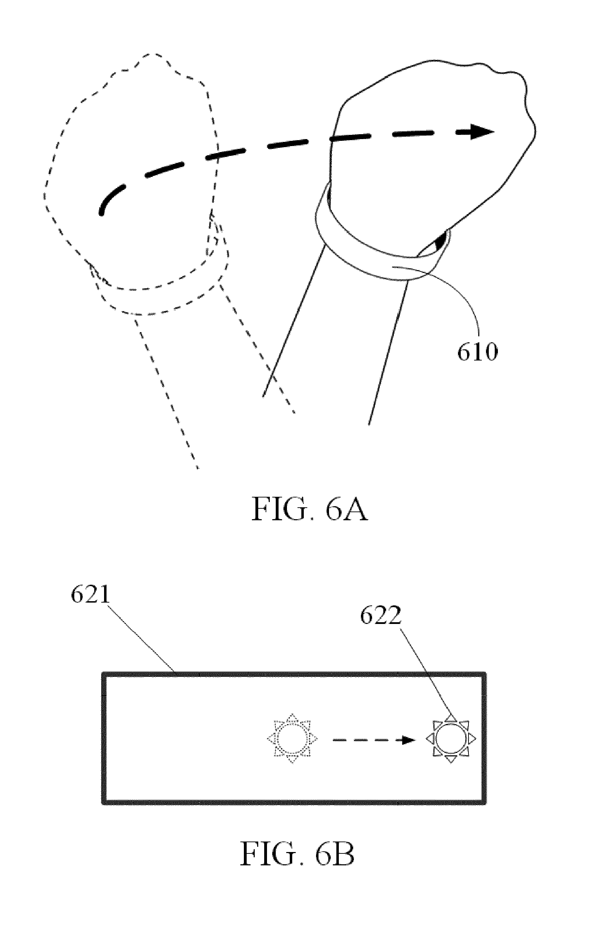

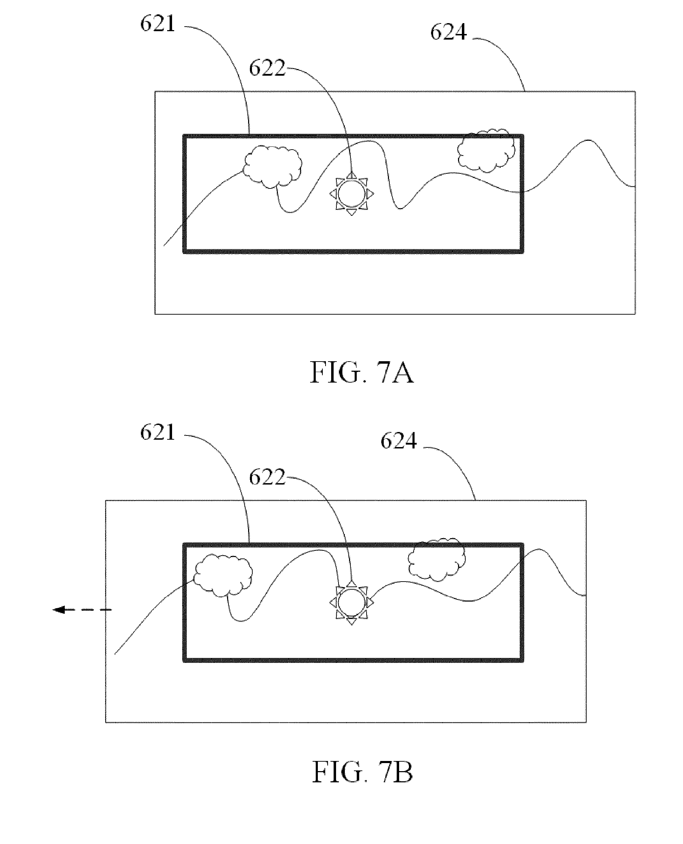

Further, in some embodiments, the specific application can move at least one object displayed in the display unit of the second electronic device according to the motion information. Similarly, the motion information can comprise a movement velocity, a movement direction, and/or a movement distance corresponding to a motion, and the object can be moved according to the motion information. For example, the display unit 621 of the second electronic device can display an object 622, such as the sun icon. The first electronic device 610 can generate a motion from left to right, as shown in Fig. 6A, and the corresponding information is transmitted to the second electronic device via a network. The second electronic device can move the position of the object 622 in the display unit 621 according to the motion information received from the first electronic device 610, as shown in Fig. 6B. Additionally, in some embodiments, the display unit 621 of the second electronic device can simultaneously display the object 622, such as the sun icon, and a background figure 624, as shown in Fig. 7A. It is noted that, only a portion of the background figure 624, which is within the display area corresponding to the display unit 621 will be displayed. To ensure that the object is always displayed in the center of the display unit 621, the second electronic device can move the background figure 624 according to the motion information received from the first electronic device, as shown in Fig. 7B. It is understood that, in the embodiment, the movement direction of the background figure 624 is opposite to the movement direction of the received motion information.

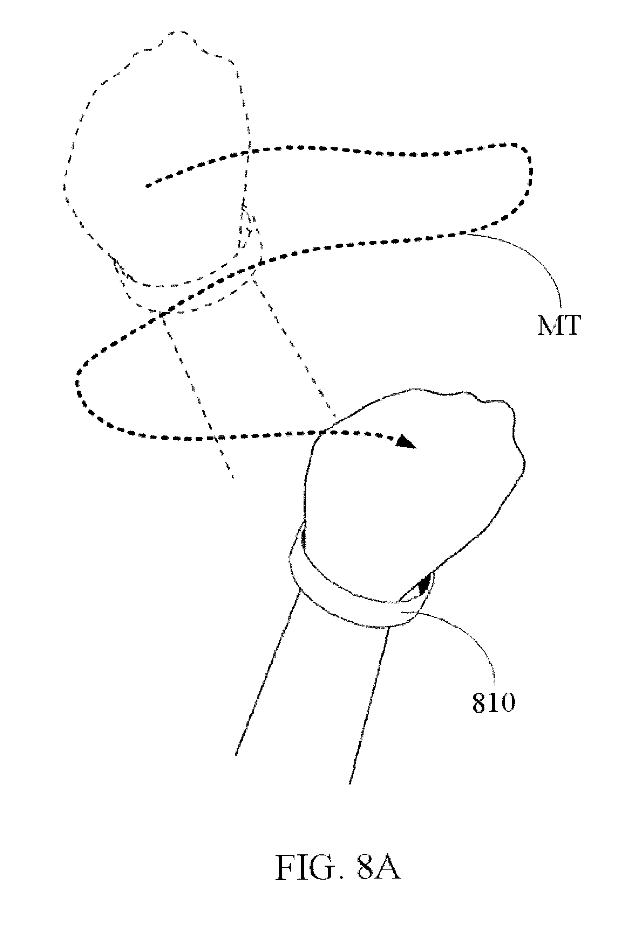

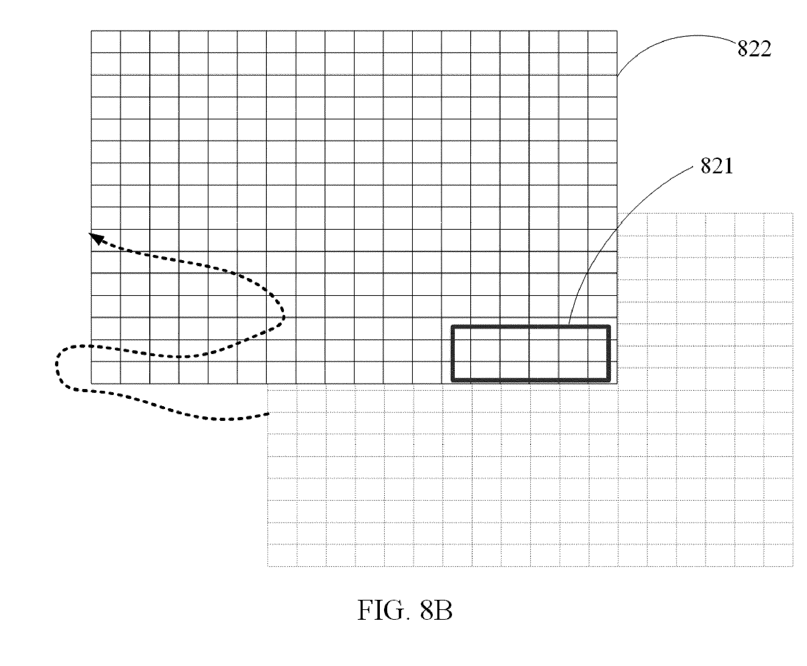

Additionally, Figs. 8A and 8B are schematic diagrams illustrating an example of motion management for electronic devices of the invention. In the example, a wearable device 810 can be worn on the arm of a first user, and the first user can use the wearable device 810 to write a specific track MT in the air, as shown in Fig. 8A. Similarly, the sensor of the wearable device 810 can detect the motion of the wearable device 810 to generate the corresponding motion information. The wearable device 810 transmits the motion information to a wearable device worn on the arm of a second user via a network. The wearable device of the second user can have a specific figure 822, and the display unit 821 of the wearable device can display a display portion in the specific figure 822. In some embodiments, the specific application in the wearable device of the second user can determine the display portion in the specific figure 822 according to the received motion information, and the display portion is displayed in the display unit 821. In some embodiments, the display portion can be originally located at a first position in the specific figure, and the display portion is moved from the first position to a second position in the specific figure according to the motion information, wherein the movement direction of the display portion is opposite to the movement direction of the motion information. In the example, the specific figure 822 can be moved according to the motion information received from the wearable device 810, as shown in Fig. 8B. It is noted that, the movement direction of the specific figure 822 is opposite to the movement direction of the specific track MT corresponding to the wearable device 810. The data displayed in the display unit 821 will be changed since the specific figure 822 is moved. It is understood that, in some embodiments, the specific figure 822 may be any figure having grid lines. By using the mark of grid lines, the movement in a display unit having a limited size will have significant visual effects.

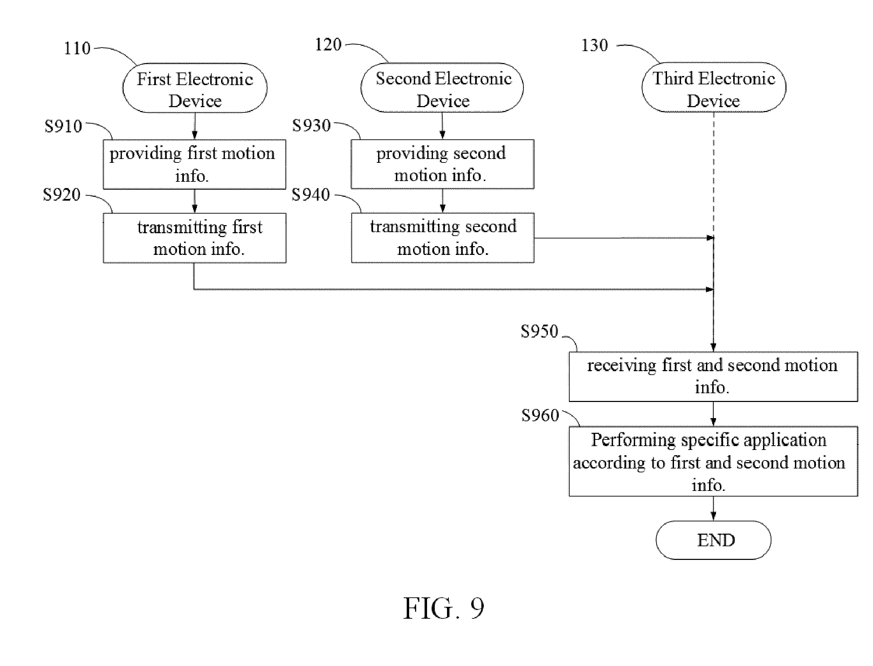

Fig. 9 is a flowchart of another embodiment of a method for managing motion information for electronic devices of the invention.

In step S910, first motion information is provided in a first electronic device 110. It is understood that, in some embodiments, the first electronic device 110 can have at least one sensor for detecting a motion of the first electronic device 110 to generate the first motion information. In some embodiments, the sensor may be an accelerometer and/or a Gyro sensor. The first motion information may be a variation of displacement, velocity, and/or angular acceleration generated in a predefined interval in which the motion of the first electronic device occurred. It is noted that, the above sensors are only examples of the present invention, and the present invention is not limited thereto. In step S920, the first electronic device 110 transmits the first motion information to a third electronic device 130 via a network, such as a wired network, a telecommunication network, and/or a wireless network. In step S930, second motion information is provided in a second electronic device 120. Similarly, in some embodiments, the second electronic device 120 can have at least one sensor for detecting a motion of the second electronic device 120 to generate the second motion information. Similarly, in some embodiments, the sensor may be an accelerometer and/or a Gyro sensor. The second motion information may be a variation of displacement, velocity, and/or angular acceleration generated in a predefined interval in which the motion of the second electronic device occurred. It is noted that, the above sensors are only examples of the present invention, and the present invention is not limited thereto. In step S940, the second electronic device 120 transmits the second motion information to the third electronic device 130 via a network, such as a wired network, a telecommunication network, and/or a wireless network. In step S950, the third electronic device 130 receives the first motion information and the second motion information from the first electronic device 110 and the second electronic device 120, respectively, and in step S960, a specific application is performed according to the first motion information and the second motion information.

It is understood that, in some embodiments, the third electronic device 130 can perform an accumulation process for the first motion information and the second motion information in respective direction axes, and perform the specific application according to the result of the accumulation process. For example, in a tug of war application, each user can wear a wearable device, and cause the wearable device to generate a motion. At least one sensor of the wearable device can detect the motion of the wearable device to generate the corresponding motion information, and the motion information is transmitted to a specific electronic device via a wireless network. The specific electronic device can perform an accumulation process for the motion information received from the respective wearable devices in respective direction axes, thereby accumulating the direction and strength of the respective users. Then, the specific electronic device performs the tug of war application according to the result of the accumulation process (accumulated direction and strength). In another example, each dancer can wear at least one wearable device, and the wearable device will generate a motion when the dancer begin to dance. At least one sensor of the wearable device can detect the motion of the wearable device to generate the corresponding motion information, and the motion information is transmitted to a specific electronic device via a wireless network. After the motion information is received from the respective wearable device, the specific electronic device can perform a comparison process for the received motion information, and point out the inconsistency and/or asynchrony between the motion information.

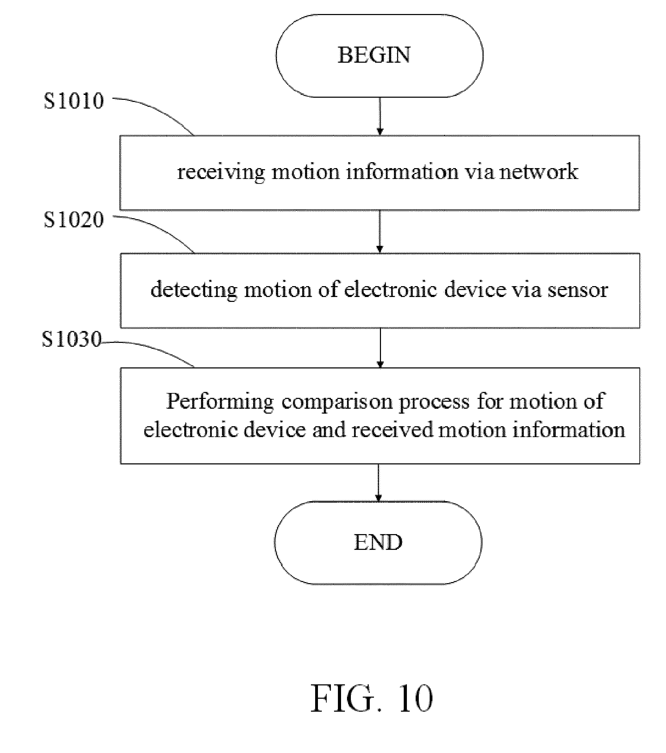

Fig. 10 is a flowchart of another embodiment of a method for managing motion information for electronic devices of the invention.

In step S1010, motion information is received via a network, such as a wired network, a telecommunication network, and/or a wireless network. It is understood that, in some embodiments, the motion information can be received from a specific server. In some embodiments, the motion information can be received from a specific electronic device, in which the specific electronic device has at least one sensor for detecting a motion of the specific electronic device to generate the motion information. In some embodiments, the sensor may be an accelerometer and/or a Gyro sensor. The motion information may be a variation of displacement, velocity, and/or angular acceleration generated in a predefined interval in which the motion of the specific electronic device occurred. It is noted that, the above sensors are only examples of the present invention, and the present invention is not limited thereto. In step S1020, a motion of the electronic device is detected by at least one sensor of the electronic device. Similarly, the detected motion of the electronic device corresponds to motion information, which is a variation of displacement, velocity, and/or angular acceleration generated in a predefined interval in which the motion of the electronic device occurred. Then, in step S1030, a comparison process is performed for the motion of the electronic device and the received motion information. It is noted that, in some embodiments, the specific electronic device and the electronic device can synchronously generate the motion, and the comparison process can be accordingly performed. In some embodiments, the motion information corresponding to the specific electronic device can be completely received, and then compared with the motion generated by the electronic device. It is understood that, in some embodiments, at least one component of the electronic device and/or the specific electronic device can be triggered to perform a process according to the result of the comparison process. For example, when the result of the comparison process indicates that the detected motion matches with the received motion information, the electronic device and/or the specific electronic device can generate a notification via at least one component, such as a vibration unit, a display unit, and/or a voice output unit. In another example, when the result of the comparison process indicates that the detected motion does not match with the received motion information, the electronic device and/or the specific electronic device can generate a notification via at least one component.

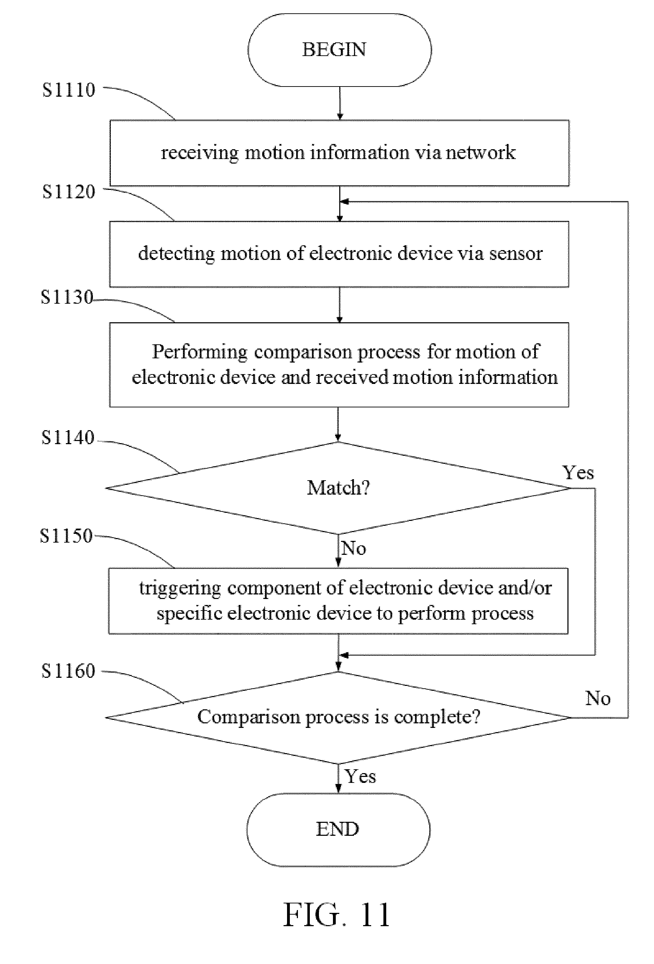

Fig. 11 is a flowchart of another embodiment of a method for managing motion information for electronic devices of the invention.

In step S1110, motion information is received via a network, such as a wired network, a telecommunication network, and/or a wireless network. Similarly, in some embodiments, the motion information can be received from a specific server. In some embodiments, the motion information can be received from a specific electronic device, in which the specific electronic device has at least one sensor for detecting a motion of the specific electronic device to generate the motion information. In some embodiments, the sensor may be an accelerometer and/or a Gyro sensor. The motion information may be a variation of displacement, velocity, and/or angular acceleration generated in a predefined interval in which the motion of the specific electronic device occurred. It is noted that, the above sensors are only examples of the present invention, and the present invention is not limited thereto. In step S1120, a motion of the electronic device is detected by at least one sensor of the electronic device. Similarly, the detected motion of the electronic device corresponds to motion information, which is a variation of displacement, velocity, and/or angular acceleration generated in a predefined interval in which the motion of the electronic device occurred. Then, in step S1130, a comparison process is performed for the motion of the electronic device and the received motion information. It is noted that, the comparison process determines whether the motion of the electronic device and the received motion information are consistent and/or synchronous. When the motion of the electronic device matches with the received motion information (Yes in step S1140), the flow goes to step S1160. When the motion of the electronic device does not match with the received motion information (No in step S1140), in step S1150, at least one component of the electronic device is triggered to perform a process. It is understood that, in some embodiments, the at least one component may comprise a vibration unit. When the motion of the electronic device does not match with the received motion information, then at least one vibration unit of the electronic device is triggered to perform a vibration process. In some embodiments, the at least one component may comprise a display unit. When the motion of the electronic device does not match with the received motion information, the display unit of the electronic device is triggered to perform a display process. In some embodiments, the at least one component may comprise a voice output unit. When the motion of the electronic device does not match with the received motion information, the voice output unit of the electronic device is triggered to output a sound. Then, in step S1160, it is determined whether the comparison process is complete. When the comparison process is not complete (No in step S1160), the procedure returns to step S1120. When the comparison process is complete (Yes in step S1160), the procedure is terminated. It is understood that, in some embodiments, at least one component of the specific electronic device that transmits the motion information can be also triggered to perform a process when the motion of the electronic device does not match with the received motion information. Additionally, in some embodiments, only the at least one component of the specific electronic device will be triggered to perform a process when the motion of the electronic device does not match with the received motion information.

For example, in a dance learning application, a student can have a wearable device, and the student can download motion information corresponding to a dance to the wearable device. It is noted that, the motion information can be created in advance, or generated by a teacher wearing a wearable device in real time. The student can wear the wearable device, and the wearable device will generate a motion when the student begins to dance. At least one sensor of the wearable device can detect the motion of the wearable device to generate the corresponding motion information. The wearable device can compare the detected motion information with the downloaded motion information. When the detected motion information does not match with the downloaded motion information, that is the student makes wrong moves, the wearable device will trigger a vibration unit to perform a vibration process. In some cases, when the student makes wrong moves, a vibration unit of the wearable device worn on the teacher will be also triggered to perform a vibration process to notify the teacher.

Therefore, the methods and systems for managing motion information for electronic devices of the present invention can transmit motion information of an electronic device to another electronic device, and the electronic device which received the motion information can perform related applications according to the motion information, thereby increasing the applicability of motion on electronic devices.

Methods for managing motion information for electronic devices may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A method for managing motion information for electronic devices, comprising:
receiving motion information by an electronic device (420) via a network;
detecting a motion of the electronic device (420) by at least one sensor of the electronic device (420); and
performing a comparison process for the detected motion of the electronic device (420) and the received motion information.

2. The method of claim 1, further comprising a step of detecting a motion of a specific electronic device (410) to generate the motion information by at least one sensor of the specific electronic device (410).

3. The method of claim 2, further comprising a step of triggering at least one component (V1) of the electronic device (420) or at least one component of the specific electronic device (410) to perform a specific process according to the result of the comparison process.

4. A method for managing motion information for electronic devices, comprising:
providing motion information in a first electronic device (410);
transmitting the motion information to a second electronic device (420) via a network by the first electronic device (410); and
performing a specific application according to the motion information by the second electronic device (420), wherein the specific application triggers at least one component (V1) of the second electronic device (420) to perform a process according to the motion information.

5. The method of claim 4, wherein the specific application triggers at least one vibration unit (V1) of the second electronic device (420) to perform a vibration process according to the motion information, thus representing the received motion information.

6. The method of claim 4 or 5, further comprising a step of displaying a specific figure (822) via a display unit (821) of the second electronic device (420), wherein the specific application determines a display portion in the specific figure (822) according to the motion information, and the display portion is displayed in the display unit (821), and the display portion is originally located at a first position in the specific figure (822), and the display portion is moved from the first position to a second position in the specific figure (822) according to the motion information, wherein the movement direction of the display portion is opposite to the movement direction of the motion information.

7. A method for managing motion information for electronic devices, comprising:
providing first motion information in a first electronic device (110);
providing second motion information in a second electronic device (120);
transmitting the first motion information to a third electronic device (130) via a network by the first electronic device (110);
transmitting the second motion information to the third electronic device (130) via a network by the second electronic device (120); and
performing a specific application according to the first motion information and the second motion information by the third electronic device (130).

8. The method of claim 7, wherein the third electronic device (130) performs an accumulation process for the first motion information and the second motion information in respective direction axes, and performs the specific application according to the result of the accumulation process.

9. A system (100) for managing motion information for electronic devices, comprising:
a network connecting unit (210) receiving motion information via a network;
at least one sensor detecting a motion of an electronic device (200); and
a processing unit (230) performing a comparison process for the detected motion of the electronic device (200) and the received motion information.

10. A system (100) for managing motion information for electronic devices, comprising:
a first electronic device (410) having motion information, and transmitting the motion information via a network; and
a second electronic device (420) receiving the motion information via the network, and performing a specific application according to the motion information, wherein the specific application triggers at least one component (V1) of the second electronic device (420) to perform a process according to the motion information.

11. A system (100) for managing motion information for electronic devices, comprising:
a first electronic device (110) having first motion information, and transmitting the first motion information via a network;
a second electronic device (120) having second motion information, and transmitting the second motion information via the network; and
a third electronic device (130) respectively receiving the first motion information and the second motion information via the network, and performing a specific application according to the first motion information and the second motion information.
